# EUROPÄISCHE PATENTANMELDUNG

(11) **EP 0 586 829 A1**
(43) Veröffentlichungstag der Anmeldung: **16.03.1994**
(21) Anmeldenummer: 93111082.9
(22) Anmeldetag: 10.07.1993
(51) Int. Cl.: A01F 12/30, F16C 9/02

(54) **Lager für eine Welle**

(30) Priorität: 12.08.1992 US 929646
(71) Anmelder: DEERE & COMPANY, Moline, Illinois 61265 (US)
(72) Erfinder: Bennett, Robert Edwin, Moline, Illinois 61265 (US); Schwartz, Michael Dean, East Moline, Illinois 61244 (US)
(74) Vertreter: Feldmann, Bernhard

(57) **Zusammenfassung**

Ein Lager (80) für eine als Kurbelwelle ausgebildete Welle (60), z. B. zur Lagerung eines Strohschüttlers (40) einer Erntemaschine (10), weist zwei aus Metall oder Kunststoff gebildete Lagerteile (82, 84) auf, die an den jeweiligen Anschlußflächen (102, 104, 110, 114) Stege (106, 108, 112, 116) und Basen (119 - 124) aufweisen, die wahlweise miteinander in Verbindung bringbar sind und somit eine Ausnehmung (90) von unterschiedlicher Weite zulassen.

## Beschreibung

Die Erfindung betrifft ein Lager mit zwei Lagerteilen, die jeweils eine halbzylindrische Ausnehmung zur Aufnahme einer Welle aufweisen.

Die US-A-3,265,451 offenbart Schüttlerwellenlager aus Holz, die zweiteilig ausgebildet sind, eine rundzylindrische Lagerausnehmung aufweisen und mittels Schrauben an der Unterseite von Strohschüttlern befestigt werden. Derartige Schüttlerwellenlager werden in der Praxis in großem Umfang benutzt.

Dieser bekannten Ausführung haftet der Nachteil an, daß die Holzlager sowohl bei der Fertigung wie auch nach der Montage nicht unerhebliche Toleranzen aufweisen, die von der Feuchtigkeit des verwendeten Holzes abhängen. Demgemäß sitzen diese Holzlager mehr oder weniger stramm oder lose auf der Schüttlerwelle. Zur Einstellung des gewünschten Spiels der Schüttlerwelle in der Lagerausnehmung werden Karton- oder Blechstreifen verwendet, die zwischen die beiden Lagerteile in erforderlicher Dicke eingelegt werden; aufgrund des Verschleißes an dem Holz muß dieses Spiel überprüft und neu eingestellt werden. Nachdem das Holz weicher ist als der Stahl der Schüttlerwelle und diese Lager ständig von Schmutz beaufschlagt werden, ist der Verschleiß nicht unbeträchtlich.

Nach einer anderen Ausführungsform (DEUTZ-FAHR Großmähdrescher, S. 10, Druckvermerk 91 469 01) werden Stahl-Rollenlager verwendet, die mittels Spannringen auf der Schüttlerwelle befestigt werden.

Derartige Lagerungen haben den Nachteil, daß stets Biegemomente von den wesentlich breiteren Schüttlern auf die schmalen Rollenlager einwirken, die zu einer Materialermüdung führen können. Außerdem ist der Krümmungsradius der Kurbelwelle relativ groß zu halten, damit die Spannringe über die verschiedenen Kröpfungen der Schüttlerwelle geschoben werden können. Ferner sind diese Lager wesentlich teuerer als Holzlager, und ein Ausbau eines innenliegenden Lagers bedingt, daß zunächst die darauf nach außen folgenden Lager ebenfalls ausgebaut werden.

Die der Erfindung zugrunde liegende Aufgabe wird darin gesehen, ein Lager für eine Welle, insbesondere eine Kurbelwelle vorzuschlagen, das mit beherrschbaren Toleranzen verwendet werden kann.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf die nach Anspruch 1 vorgeschlagene Weise tritt keine Maßänderung infolge von Feuchtigkeitsänderungen ein. Auch eine Materialermüdung wird vermieden, weil Gleitlager in axialer Richtung relativ groß ausgebildet werden können und somit Biegemomente von dem zu tragenden Teil auffangen können.

Die nach Anspruch 2 vorgeschlagene gegebenenfalls alternative Lösung sieht in dem Steg und der Basis Mittel vor, mit denen die Lagerteile weiter oder näher mit Bezug auf eine zwischen ihnen liegende Mittenebene angeordnet werden können. Je nach dem, ob zwei Stege, zwei Basen oder jeweils ein Steg und eine Basis aufeinandertreffen, erhält die von beiden Lagerteilen umfaßte Ausnehmung zur Aufnahme der Welle eine größere oder eine kleinere Weite und somit die Möglichkeit, das geforderte Spiel einzustellen oder einzuhalten. Ein Ausgleich der Weite in der Richtung der trennenden Mittenebene kann entweder durch eine im voraus vorgesehene Überweite oder durch eine ausreichende Flexibilität der Lagerteile 82, 84 erreicht werden.

Die Variationsmöglichkeiten werden erhöht, wenn an zwei Anschlußflächen jedes Lagerteils, also jeweils seitlich der Lagerausnehmungen, je ein Steg und je eine Basis vorgesehen ist.

Eine Möglichkeit, Stege und Basen abwechselnd vorzusehen, besteht darin, diese in gleichem radialem Abstand, aber in axialer Richtung aufeinanderfolgend anzuordnen. Nach einer anderen Lösung sind die Stege und die Basen radial versetzt, so daß sie in unterschiedlicher Weise miteinander in Eingriff gebracht werden können, wenn man die beiden Lagerteile um 180 Grad zueinander versetzt aneinander fügt.

Zur axialen Positionierung der Welle gegenüber dem Lager wird vorgeschlagen, wenigstens einen Zentrierungsring auf der Welle anzubringen, der in einer entsprechenden Zentrierausnehmung in den Lagerteilen aufgenommen wird. Wenn mehrere Zentrierausnehmungen und -ringe vorgesehen werden, findet eine Lastenteilung und somit eine sicherere Führung statt. Insbesondere wenn die Zentrierungsringe auf der Welle lösbar und somit in verschiedenen Stellungen aufsetzbar sind, kann auch das axiale Spiel zwischen Zentrierungsring und Zentrierausnehmung eingestellt werden. Mittels der Einarbeitung verschiedener Zentrierausnehmungen kann auch auf bereits vorgegebene Zentrierringanordnungen reagiert werden.

Zur Herabsetzung der Reibkräfte und somit zur Vermeidung des Verschleißes ist es sinnvoll, ein Schmiermittelreservoir, z. B. in einer weiteren Ausnehmung vorzusehen, wobei insbesondere durch Kanäle das Schmiermittel zu den zu schmierenden Stellen geleitet werden kann.

Zur Befestigung der Lagerteile ist es günstig, in wenigstens einem Lagerteil Befestigungsblöcke vorzusehen, z. B. einzugießen, die dem Lagerteil eine ausreichende Festigkeit verleihen und eine Schraubenbohrung enthalten.

Zur spannungsfreien Anlage des Lagerteils an dem zu lagernden Teil wie auch aus Gründen der einfacheren Herstellung ist es günstig, die Befestigungsblöcke überstehen zu lassen. Damit sich zwischen den Befestigungsblöcken aber kein Material ansammelt und aufbaut, wird zudem vorgeschlagen, zwischen den Befestigungsblöcken einen Sperrflansch einzufügen.

Die Verwendung des erfindungsgemäßen Lagers zur Lagerung der Strohschüttler eines Mähdreschers auf einer Kurbelwelle hat sehr große Vorteile, weil dort beträchtliche Umwelteinflüsse, wie Feuchtigkeitsschwankungen, Beaufschlagung durch Wasser und Schmutz und mechanische Belastungen vorliegen, die mittels des erfindungsgemäßen Lagers aufgefangen werden können.

In der Zeichnung ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: eine Welle in perspektivischer Darstellung mit einem erfindungsgemäßen Lager,
- Fig. 3: eine obere Hälfte des Lagers in Vorderansicht,
- Fig. 4: eine untere Hälfte des Lagers in Vorderansicht,
- Fig. 5: einen Schnitt durch die obere Hälfte des Lagers in Figur 3 entlang der Linie 5-5 und in der Blickrichtung der dazugehörigen Pfeile und
- Fig. 6: einen Schnitt durch die untere Hälfte des Lagers in Figur 4 entlang der Linie 6-6 und in der Blickrichtung der dazugehörigen Pfeile.

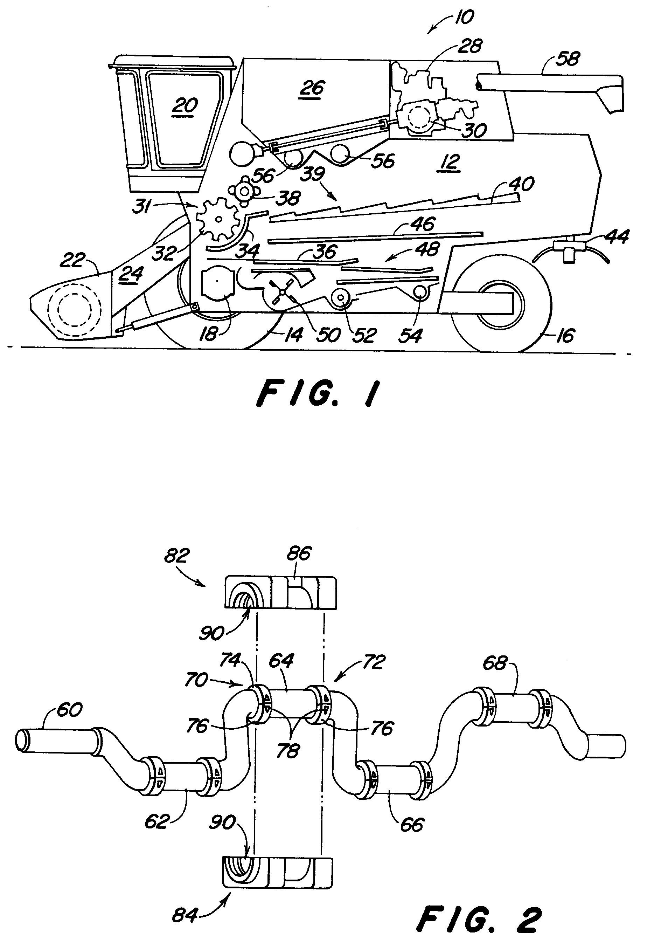

Figur 1 zeigt eine landwirtschaftliche Erntemaschine 10 in der Art eines Mähdreschers mit einem Chassis 12 und auf dem Boden abgestützten Rädern 14 und 16. Die vorderen Räder 14 werden mittels eines Hydraulikmotors 18 angetrieben, der zwischen beiden Rädern 14 vorgesehen ist. Die Erntemaschine 10 wird von einer Bedienungsperson bedient, die in einer Fahrerkabine 20 sitzt. Ein Erntevorsatz 22 erstreckt sich von dem Chassis 12 der Erntemaschine 10 aus nach vorne und wird dazu benutzt, Erntegut von einem Feld aufzunehmen. Nach der Aufnahme wird das Erntegut durch einen Schrägförderer 24 in das Innere der Erntemaschine 10 geführt. Ein Behälter 26 für gereinigtes Getreide ist hinter der Fahrerkabine 20 im oberen Bereich der Erntemaschine 10 angeordnet. Hinter dem Behälter 26 befindet sich quer erstreckend eine Verbrennungskraftmaschine 28, die die Hauptantriebsquelle der Erntemaschine 10 darstellt und Fortbewegungsmittel, Erntemittel, Dreschmittel 31, Abscheidemittel 39 und Reinigungsmittel 41 antreibt. Die Verbrennungskraftmaschine 28 ist mit einem Getriebe 30 versehen, über das die verschiedenen benutzten Mittel angetrieben werden.

Zwischen Seitenwänden der Erntemaschine 10, die zugleich einen Teil des Chassis 12 bilden, sind die bereits erwähnten Dresch-, Abscheide- und Reinigungsmittel 31, 39 und 41 untergebracht. Die Dresch- und Abscheidemittel 31, 39 trennen das Korn von dem Stroh und der Spreu des geernteten Guts, das von dem Schrägförderer 24 dem Dreschmittel 31 zugeführt wird. Das Dreschmittel 31 enthält sich jeweils quer erstreckend eine Dreschtrommel 32, einen Dreschkorb 34 und eine Wendetrommel 38. Wenn das Erntegut zwischen der Dreschtrommel 32 und dem Dreschkorb 34 hindurchtritt, fallen das Korn und die Spreu durch Öffnungen in dem Dreschkorb 34 auf einen Vorbereitungsboden 36, und das verbleibende Stroh sowie nicht abgeschiedenes Korn gelangen weiter zu der Wendetrommel 38.

Nach dem Dreschen wird das Stroh zu dem Abscheidemittel 39 weitergeleitet. Die Hauptelemente des Abscheidemittels 39 werden von Strohschüttlern 40 dargestellt, die oszillieren und das Stroh zu dem rückwärtigen Bereich der Erntemaschine 10 führen, wo es mittels eines Strohstreuers 44 zurück auf den Boden gegeben wird. Korn und Spreu, die durch die Strohschüttler 40 hindurch fallen, fallen auf eine geneigt angeordnete, oszillierende Wanne 46, die das Korn und die Spreu dem Vorbereitungsboden 36 zuführt. Das Korn und die Spreu werden von dem Vorbereitungsboden 36 mittels eines nicht gezeigten oberen Schneckenzusammenbaus dem Reinigungsmittel 41 zugeführt, dessen Hauptelement von einem Siebkasten 48 gebildet wird. Der Siebkasten 48 wird dazu benutzt, die Spreu von dem Korn zu trennen. Das Korn und die Spreu, die auf ein Kurzstrohsieb und ein Körnersieb des Siebkastens 48 fallen, werden von einem Luftstrom eines Gebläses 50 beaufschlagt, der die leichtere Spreu aus dem rückwärtigen Bereich der Erntemaschine 10 bläst, während das schwerere Korn durch den Siebkasten 48 einer Körnerschnecke 52 zufällt, die es annimmt.

Die Körnerschnecke 52 gibt das gereinigte Korn an einen nicht gezeigten Körnerelevator weiter, der es wiederum zu dem Behälter 26 für das gereinigte Korn bringt. Überkehr, also hauptsächlich nicht ausgedroschene Ähren des Getreides, fallen hingegen einer Überkehrschnecke 54 zu, die sie zurück zu der Dreschtrommel 32 und dem Dreschkorb 34 bringt. Wenn der Behälter 26 für das saubere Getreide entladen werden soll, bringen Querschnecken 56 das Korn an die Seite des Behälters 26, wo es zu einer nicht gezeigten vertikalen Entleerschnecke gelangt, die es durch ein Entleerrohr 58 befördert. Während des Entladevorgangs erstreckt sich das Entleerrohr 58 normalerweise von der Seite der Erntemaschine 10 nach außen, so daß das gereinigte Korn direkt in einen Anhänger oder Lastwagen abgegeben werden kann. Es wird daraufhingewiesen, daß diese gesamte Erntemaschinenausbildung als herkömmlicher, konventioneller Mähdrescher bezeichnet wird und weithin bekannt ist. Der eigentliche Zweck der vorliegenden Erfindung ist auf ein neues und verbessertes erfindungsgemäßes Lager 80 für die Strohschüttlerkurbelwellen gerichtet.

Figur 2 zeigt eine sich quer erstreckende Welle 60 für die Strohschüttler 40 in der Art einer Kurbelwelle mit vier Wellenkröpfungen 62, 64, 66 und 68. Zwei Zentrierungsringe 70 und 72 sind auf jede der Wellenkröpfungen 62, 64, 66 und 68 montiert. Jeder Zentrierungsring 70, 72 enthält zwei halbkreisförmige Schalen 74, 76, die mittels Schrauben 78 miteinander verschraubt sind und zwischen sich die Welle 60 einklemmen. Das Verschrauben der Zentrierungsringe 70, 72 vereinfacht die evtl. Reparatur der Welle 60 , weil es es einem Mechaniker erlaubt, einfach die Stellung der Zentrierungsringe 70, 72 einzustellen, wenn er die Erntemaschine 10 repariert.

Das erfindungsgemäße Lager 80 für den Strohschüttler 40 als den zu lagernden, zu tragenden Teil enthält zwei Lagerteile 82 und 84. Der obere Lagerteil 82 ist mit Befestigungsblöcken 85 und einem Sperrflansch 86 versehen, wobei im Einsatz die Wanne des Strohschüttlers 40 auf den Befestigungsblöcken 85 aufsitzt. Durch die Befestigungsblöcke 85 führen Schraubenbohrungen 96 für Schrauben, die sich auch durch die Wanne der Strohschüttler 40 erstrecken. Der Sperrflansch 86 ist zwischen den Befestigungsblöcken 85 vorgesehen und verhindert, daß Erntegutteile zwischen der Wanne des Strohschüttlers 40 und der Oberseite des oberen Lagerteils 82 eingeklemmt werden.

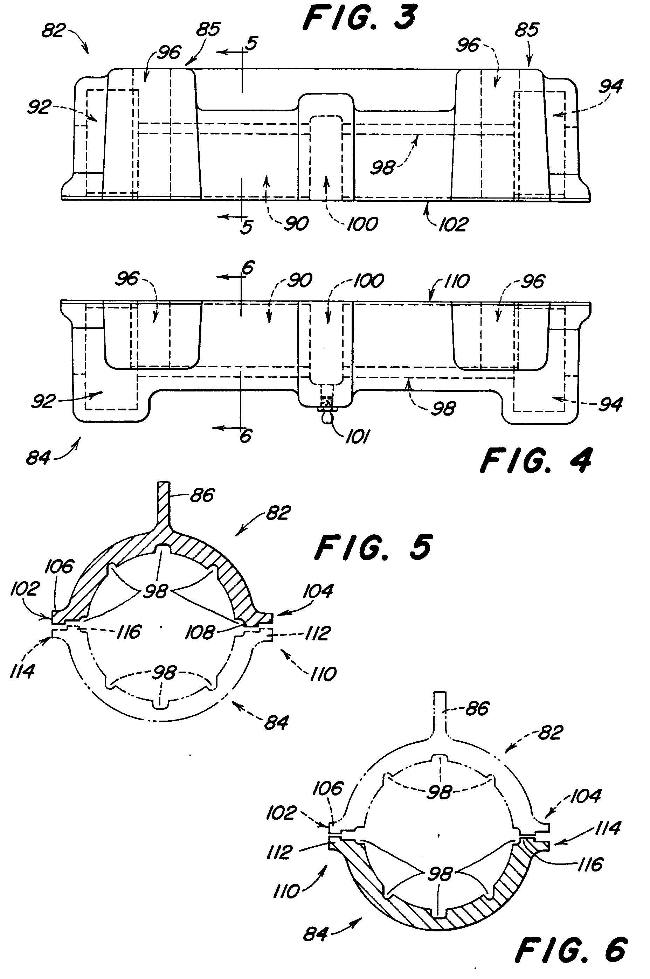

Die Lagerteile 82 und 84 sind am besten in den Figuren 3 und 4 dargestellt. Beide Lagerteile 82, 84 weisen einen Körper mit halbzylindrischen und sich längs erstreckenden Ausnehmungen 90 auf, der über die gesamte Länge der Quererstreckung des Lagerteils 82, 84 verläuft. Beide Lagerteile 82, 84 sind auch mit zwei Zentrierausnehmungen 92 und 94 zur Aufnahme der Zentrierungsringe 70, 72 versehen. Wenn die Lagerteile 82, 84 miteinander verbunden werden, grenzen die beiden Ausnehmungen 90 aneinander und bilden gemeinsam eine rundzylindrische Ausnehmung zur Aufnahme der Welle 60 der Strohschüttler 40. In gleicher Weise bilden die beiden Zentrierausnehmungen 92, 94 zwei zylindrische Ausnehmungen zur Aufnahme der Zentrierungsringe 70, 72.

Jeder Lagerteil 82, 84 ist mit vier Schraubenbohrungen 96 versehen, von denen jeweils nur zwei zu sehen sind und die miteinander fluchten und einen Montagezusammenbau zum Montieren der Wanne des Strohschüttlers 40 auf das Lager 80 und die Welle 60 der Strohschüttler 40 bilden. Die Schrauben verlaufen durch die Wanne und die Lagerteile 82, 84, wenn die Wanne an die Welle 60 der Strohschüttler 40 angeschlossen ist.

Beide Lagerteile 82, 84 sind aus einer Zinklegierung hergestellt und können geschmiert werden. Auch andere Legierungen oder Stoffmischungen sind denkbar - auch Kunststoffe. Eine Anzahl sich längs erstreckender Kanäle 98 verläuft über die Länge der zwei halbzylindrischen Ausnehmungen 90, so daß Schmiermittel, wie Fett, gleichmäßig über das Lager 80 bzw. dessen Gleitflächen verteilt werden kann. Zusätzlich unterbrechen diese Kanäle 98 die zylindrische Fläche, die durch die Lagerteile 82, 84 definiert wird, so daß Abrieb und Metallteile von den als Nuten ausgebildeten Kanälen 98 aufgefangen werden können, bevor die Lagerteile 82, 84 und die Welle 60 beschädigt werden. Die Kanäle 98 verleihen jedem Lagerteil 82, 84 zusätzliche Flexibilität, damit sie sich in der Weite anpassen können.

Beide Lagerteile 82, 84 begrenzen eine mittige kreisförmige Ausnehmung 100, die eine Schmiermittelkammer zur Aufnahme des Schmiermittels für die Kanäle 98 bildet.

Schmiermittel wird in das Lager 80 direkt durch einen Schmiernippel 101 eingespritzt, der sich an dem unteren Lagerteil 84 befindet. Die mittige kreisförmige Ausnehmung 100 hat zudem eine zweite Funktion, nämlich die, daß das verbesserte Lager 80 einfacher an bereits bestehende Erntemaschinen 10 mit einem einzigen mittigen Zentrierungsring angebracht werden kann. Zum nachträglichen Anbau des verbesserten Lagers 80 werden neue Zentrierungsringe 70, 72 auf die Welle 60 aufgeschraubt, und der bereits aufgepreßte mittige Lagerring paßt in die mittige Ausnehmung 100.

Gemäß Figur 5 ist der obere Lagerteil 82 mit einer ersten und einer zweiten Anschlußfläche 102 und 104 versehen. Die erste Anschlußfläche 102 ist mit einem radial außenliegenden erhobenen Steg 106 versehen, dem radial nach innen eine Basis 118 folgt. Die zweite Anschlußfläche 104 hat einen radial innen liegenden, erhobenen Steg 108, dem radial nach außen eine Basis 120 folgt. In gleicher Weise hat auch der untere Lagerteil 84 eine erste Anschlußfläche 110, die mit einem radial außenliegenden erhobenen Steg 112 und einer an diesen nach innen anschließenden Basis 122 versehen ist, und eine zweite Anschlußfläche 114 mit einem radial innenliegenden erhobenen Steg 116 und einer nach außen folgenden Basis 124.

Diese erhobenen Stege 106, 108, 112, 116 lassen es zu, daß die Lagerteile 82, 84 bei diesem Ausführungsbeispiel in zwei Anordnungen mit unterschiedlichen Weiten der gesamten Ausnehmung 90 montiert werden können. Die Lagerteile 82, 84 können in einer Anordnung mit einem festen, strammen Sitz, wie sie in Figur 5 gezeigt ist, montiert werden, in der die erste Anschlußfläche 102 des oberen Lagerteils 82 an der zweiten Anschlußfläche 114 des unteren Lagerteils 84 anliegt. Oder sie können in einer Standardanordnung miteinander verbunden werden, in der die erste Anschlußfläche 102 des oberen Lagerteils 82 an der ersten Anschlußfläche 110 des unteren Lagerteils 84 bzw. die zweite Anschlußfläche 104 des oberen Lagerteils 82 an der zweiten Anschlußfläche 114 des unteren Lagerteils 84 anliegt, wie dies in Figur 6 zu sehen ist. Dies bedeutet, daß bei der Ausführung nach Figur 5 die Stege 106, 108, 112, 114 an den Basen 118 - 124 anliegen, während sich nach der Anordnung in Figur 6 die Stege 106, 108, 112, 114 aufeinander abstützen.

Wenn das erfindungsgemäße Lager 80 auf eine neue Welle 60 montiert wird, dann wird es regelmäßig in der Standardanordnung, also nach Figur 6, montiert. Wenn das Lager 80 Spiel bekommt oder hat, dreht die Bedienungsperson den unteren Lagerteil 84 so um 180 Grad um die senkrechte Radiale herum, daß das Lager 80 in seine Anordnung mit dem festen Sitz gelangt, wie dies in Figur 5 gezeigt ist.

Die Verwendung des erfindungsgemäßen Lagers 80 ist nicht auf die bei einem Strohschüttler 40 begrenzt, sondern kann bei jeder Welle, insbesondere einer Kurbelwelle verwendet werden.

## Patentansprüche

1. Lager (80) eines Strohschüttlers (40) auf einer als Kurbelwelle ausgebildeten Welle (60) mit zwei Lagerteilen (82, 84), die jeweils eine halbzylindrische Ausnehmung (90) zur Aufnahme der Welle (60) aufweisen, dadurch gekennzeichnet, daß die Lagerteile (82, 84) aus Metall, insbesondere einer Zinklegierung, oder Kunststoff hergestellt und als Gleitlager ausgebildet sind.

2. Lager (80), insbesondere nach Anspruch 1, mit zwei Lagerteilen (82, 84), die jeweils eine halbzylindrische Ausnehmung (90) zur Aufnahme einer Welle (60) aufweisen, dadurch gekennzeichnet, daß die Lagerteile (82, 84) an den einander zugelegenen Anschlußflächen (102, 104, 110, 114) jeweils wenigstens einen Steg (106, 108, 112, 116) und wenigstens eine Basis (118, 120, 122, 124) aufweisen, wobei wahlweise ein Steg (106, 108, 112, 116) an einem anderen Steg (106, 108, 112, 116) oder an einer Basis (118, 120, 122, 124) zur Anlage bringbar ist und der Steg (106, 108, 112, 116) und die Basis (118, 120, 122, 124) derart in radialer oder axialer Richtung mit Bezug auf die Längsachse der Ausnehmung (90) angeordnet sind, daß in jeder Montagestellung der beiden Lagerteile (82, 84) eine zylindrische Ausnehmung (90) für die Welle (60) entsteht.

3. Lager nach Anspruch 2, dadurch gekennzeichnet, daß je Lagerteil (82, 84) zwei, jeweils seitlich der Ausnehmung (90) gelegene Anschlußflächen (102, 104, 110, 114) vorhanden sind, wobei jede Anschlußfläche (102, 104, 110, 116) einen Steg (106, 108, 112, 116) und eine Basis (118, 120, 122, 124) trägt.

4. Lager nach einem oder mehreren der vorherigen Ansprüche, dadurch gekennzeichnet, daß die Anschlußflächen (102, 104, 110, 114) eines Lagerteils (82, 84) einen radial außenliegenden Steg (106, 112) und eine radial innenliegende Basis (118, 122) einerseits und einen radial innenliegenden Steg (108, 116) und eine radial außenliegende Basis (120, 124) andererseits aufweisen.

5. Lager nach einem oder mehreren der vorherigen Ansprüche, dadurch gekennzeichnet, daß jeder Ausnehmung (90) wenigstens eine koaxial dazu verlaufende Zentrierausnehmung (92, 94) zugeordnet ist, die der Aufnahme eines auf der Welle (60) befestigten Zentrierungsringes (70, 72) dient.

6. Lager nach einem oder mehreren der vorherigen Ansprüche, dadurch gekennzeichnet, daß jeder Ausnehmung (90) eine weitere Ausnehmung (100) zur Aufnahme von Schmiermittel zugeordnet ist.

7. Lager nach Anspruch 6, dadurch gekennzeichnet, daß in die weitere Ausnehmung (100) mindestens einen Kanal (98) zum Transport von Schmiermittel zu den Gleitflächen mündet.

8. Lager nach einem oder mehreren der vorherigen Ansprüche, dadurch gekennzeichnet, daß der an einem von dem Lager getragenen Teil angreifende Lagerteil (82) einen oder mehrere Befestigungsblöcke (85) mit Schraubenbohrungen (96) enthält.

9. Lager nach Anspruch 8, dadurch gekennzeichnet, daß mehrere Befestigungsblöcke (85) vorgesehen sind, die über den eigentlichen Körper des betreffenden Lagerteils (82, 84) hinausragen, wobei sich zwischen den darüberhinausragenden Abschnitten der Befestigungsblöcke (85) ein Sperrflansch (86) erstreckt.

10. Verwendung eines Lagers (80) nach einem oder mehreren der vorherigen Ansprüche 2 bis 9 zur Lagerung eines Strohschüttlers (40) auf einer als Kurbelwelle ausgebildeten Welle (60).
